**Europäisches Patentamt**

**European Patent Office**

**Office européen des brevets**

(19)

(11) Veröffentlichungsnummer: **0 010 765**
**B1**

# (12) EUROPÄISCHE PATENTSCHRIFT

(45) Veröffentlichungstag der Patentschrift:
27.01.82

(21) Anmeldenummer: **79104268.2**

(22) Anmeldetag: **02.11.79**

(51) Int. Cl.³: **B 62 D 33/06,** B 60 P 3/38

(54) **Schlafkabine mit quaderförmigem Innenraum.**

(30) Priorität: **07.11.78 DE 2848158**

(43) Veröffentlichungstag der Anmeldung:
**14.05.80 Patentblatt 80/10**

(45) Bekanntmachung des Hinweises auf die Patenterteilung:
**27.01.82 Patentblatt 82/4**

(84) Benannte Vertragsstaaten:
**AT FR GB IT SE**

(56) Entgegenhaltungen:
**DE-U-7 540 989**
**DE-U-7 702 742**
**LASTAUTO OMNIBUS, Nr. 12, Dezember 1977, Stuttgart,**
**»Design Projekt MAN X 90 mit Doppelstockkabine«, Seiten 20 bis 23**

(73) Patentinhaber: **M.A.N. MASCHINENFABRIK AUGSBURG-NÜRNBERG Aktiengesellschaft, Dachauer Strasse 667 Postfach 50 06 20, D-8000 München 50 (DE)**

(72) Erfinder: **Schäfer, Ortwin, Wilhelm-Leuschner-Strasse 9, D-6086 Riedstadt (DE)**
Erfinder: **Franke, Lutz, Adelheidstrasse 68, D-6200 Wiesbaden (DE)**

## Schlafkabine mit quaderförmigem Innenraum

Die Erfindung bezieht sich auf eine Schlafkabine der im Gattungsbegriff des Anspruchs 1 bezeichneten Art.

Eine solche Schlafkabine ist z. B. aus der Zeitschrift »Lastauto und Omnibus«, Nr. 12, Dezember 1977, Seiten 20 bis 23, bekannt. Schlafkabinen der vorbekannten Ausführung, die im Regelfall die äußere Form von quaderförmigen Kästen aufweisen, sind vielseitig anwendbar, da sie als komplette Baueinheit sowohl in verschiedensten Verkehrsmitteln als auch in stationären Anlagen eingesetzt werden können. Bei der vorbekannten Ausführung einer gattungsgemäßen Schlafkabine können zwei Schlafliegen nebeneinander in einer Ebene angeordnet sein oder übereinander. Diese Anordnung der Schlafliegen ist noch nicht optimal.

Aufgabe der vorliegenden Erfindung ist es deshalb, eine gattungsgemäße Schlafkabine, insbesondere im Hinblick auf die Anordnung der Liegen, so einzurichten, daß trotz geringer Innenhöhe möglichst große Bewegungsfreiheit für die Liegenbenutzer erzielbar ist und gleichzeitig ein bequemer Zugang zur Schlafkabine und ausreichender Stauraum geschaffen werden kann.

Zur Lösung dieser Aufgabe wird erfindungsgemäß vorgeschlagen, eine gattungsgemäße Schlafkabine entsprechend den Merkmalen des Kennzeichnungsteils des Anspruchs 1 auszubilden.

Durch die erfindungsgemäße Anordnung der Liegen in der Schlafkabine kann erreicht werden, daß die Liegen nur teilweise übereinander zu liegen kommen, mit einem Großteil ihrer Fläche jedoch nicht übereinander liegen. Hierdurch kann die obere Schlafliege in einem relativ geringen vertikalen Abstand über der unteren Schlafliege angeordnet werden, ohne die Bewegungsfreiheit des Benutzers der unteren Schlafliege einzuschränken, da der Teilbereich der unteren Schlafliege, über dem die obere Schlafliege zu liegen kommt, als Fußteil benutzt werden kann. Eine bevorzugte Ausführungsform der Erfindung wird durch die Merkmalskombination des Anspruchs 2 gebildet. Diese Ausführungsform ergibt eine symmetrische Aufteilung des Innenraums der Schlafkabine, wobei die von den Liegen freigelassenen Winkelräume zwischen den Kabinenseitenwänden in besonderer Weise als Stauräume geeignet sind.

Die weitere Ausbildung einer erfindungsgemäßen Schlafkabine gemäß Anspruch 3 hat den Vorteil, daß der Winkelraum zwischen den an der vertikalen Seitenkante, von der die Liege ausgeht, anliegenden Kabinenseitenwänden als Liegenfläche ausgenutzt wird, wodurch die Gesamtlänge der Liege in ihrem Mittelbereich vergrößert werden kann, d. h. also genau dort, wo die maximale Länge gebraucht wird.

Von weiteren Ausbildungen und Verbesserungen einer erfindungsgemäßen Schlafkabine, wie sie in den Unteransprüchen 4 bis 7 genannt sind, soll die besondere Ausbildung des Zugangs zur Schlafkabine gemäß Anspruch 7 hervorgehoben werden. Diese Ausbildung und Anordnung des Zugangs als Durchstieg auf einer Fläche über bzw. unter der der gesamte Raum freibleibt, stellt im Hinblick auf Platzbedarf und Bequemlichkeit eine optimale Lösung dar.

Weitere Einzelheiten und Ausbildungen der Erfindung werden im Rahmen der Beschreibung von Ausführungsbeispielen anhand der beigefügten Zeichnungen erläutert.

In den Zeichnungen zeigt

Fig. 1 eine Schlafkabine mit quaderförmigem Innenraum im Schrägbild, wobei aus Gründen der besseren Sichtbarkeit die Außenhaut der Schlafkabine als durchsichtig dargestellt ist,

Fig. 2 einen Querschnitt durch die Schlafkabine gemäß Fig. 1,

Fig. 3 einen Grundriß der Schlafkabine aus Fig. 1 bzw. 2 entsprechend der Schnittebene III-III in Fig. 2,

Fig. 4 eine Schlafkabine entsprechend Fig. 1, jedoch aufgesetzt auf ein Lkw-Fahrerhaus und mit einer anderen Liegenanordnung.

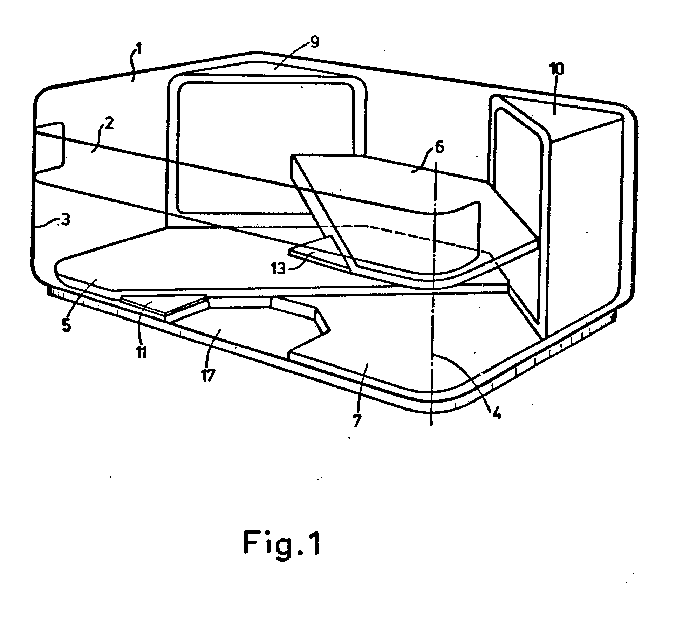

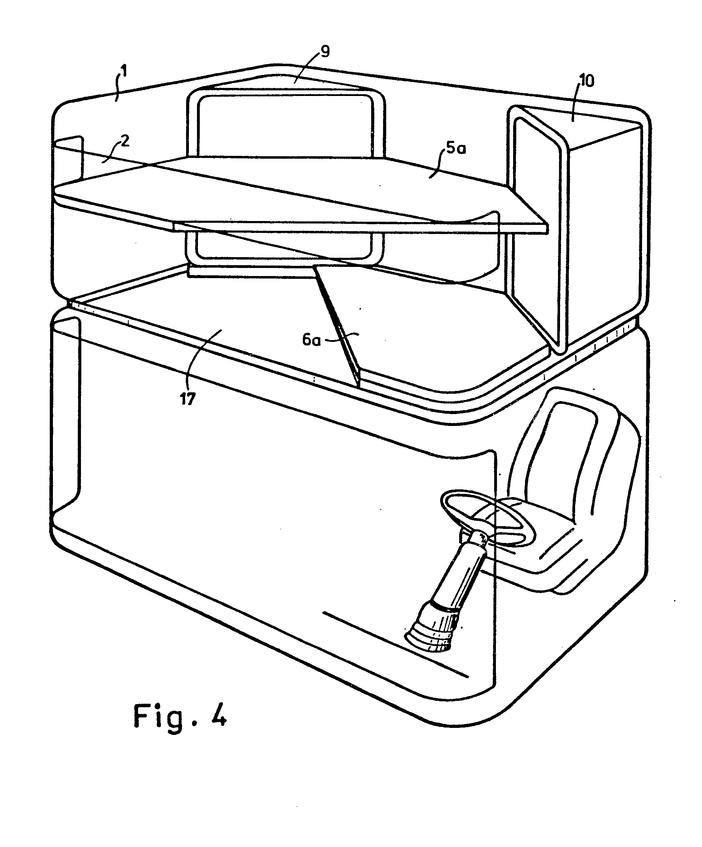

Die in Fig. 1 dargestellte Schlafkabine hat im wesentlichen die Form eines quaderförmigen Kastens, der allseitig geschlossen ist. An einer mit 1 bezeichneten Längswand befindet sich ein über deren gesamte Länge durchlaufendes Fenster 2. Die vertikalen Seitenkanten dieser Kabinenlängswand 1 sind mit 3 und 4 bezeichnet. In dieser quaderförmigen Schlafkabine sind zwei Schlafliegen angeordnet, wovon die untere mit 5, die obere mit 6 bezeichnet ist. Die untere Schlafliege 5 liegt auf dem Boden 7 der Schlafkabine auf, während die obere Liege 6 in vertikalem Abstand zu der unteren Schlafliege 5 angebracht ist. Die untere Schlafliege 5 beginnt mit ihrem Kopfende an der vertikalen Seitenkante 3 der Kabinenlängswand 1, die obere Schlafliege 6 beginnt mit ihrem Kopfende an der vertikalen Seitenkante 4. Beide Liegen 5, 6 erstrecken sich jeweils von den Seitenkanten 3, 4 diagonal durch den Kabinenraum, wobei der Diagonalwinkel gegenüber der Seitenlängswand 1 etwa 45° beträgt (vgl. die Längsachse 16 der Liege 6 in Fig. 3). Die Fahrzeuglängsrichtung ist in Fig. 3 durch die Längsachse 12 festgelegt. Durch die diagonale Anordnung der Liegen 5, 6 bleibt ein großer Teil des Raumes über der unteren Liege 5 frei, und es wird lediglich etwa das untere Drittel ( = Fußende) dieser Liege von der oberen Liege 6 überdeckt. Dadurch kann die obere Liege 6 in relativ geringer Höhe über der Liege 5 angebracht werden, so daß bei einer vorgegebenen gesamten lichten Höhe des Kabineninnenraums über der Liege 6 noch ausreichend freie Höhe zur Verfügung steht. Um im Mittelbereich der Liegen die maximal zur Verfügung stehende Länge auszunutzen, sind die Liegen sowohl an ihrem Kopf- als auch an ihrem Fußende mit ihrer Umfangskontur der Kontur des Kabineninnenraums angepaßt, so daß das Kopfende der Liegen 5, 6 jeweils pfeilförmig gestaltet ist, während das Fußende einseitig abgeschrägt ist und mit der abgeschrägten Kante an der zweiten Kabinenlängswand anliegt. In den von den Liegen 5, 6 freigelassenen Ecken zwischen der zweiten Kabinenlängswand und den zweiten Kabinenquerwänden sind Eckschränke 9, 10 angeordnet, durch die der dort entstehende freie Raum voll als Stauraum ausgenutzt ist. Anstelle der Eckschränke können selbstverständlich auch Regale oder ähnliche Ablagemöglichkeiten vorgesehen sein. Eine zusätzliche Ablagemöglichkeit ergibt sich durch die freie Bodenfläche neben der unteren Liege 5. Schließlich ist jeweils an der freien Längskante der Liegen 5, 6 im Winkelraum zwischen der Kabinenlängswand 1 jeweils noch ein dreieckiges Ablagebrett 11, 13 vorgesehen. Eine Zugangsöffnung 17 befindet sich im Boden 7 der Schlafkabine und ist lediglich als Ausschnitt ausgebildet, der innerhalb der Bodenfläche liegt, die nicht die Projektionsfläche der Liegen ist. Die Lage und Kontur der Zugangsöffnung 17 ist besonders deutlich aus Fig. 3 erkennbar. Aus dieser Figur wird auch der Anteil der unteren Liege 5 deutlich, der nicht von der oberen Liege 6 überdeckt ist.

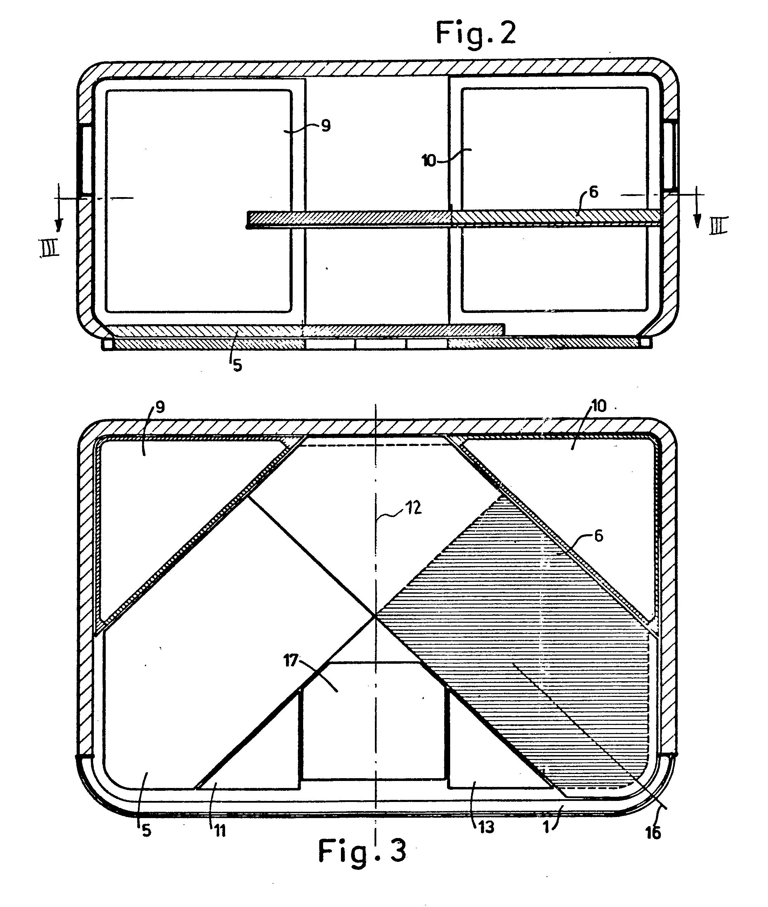

Aus Fig. 2 ist zu entnehmen, daß die lichte Höhe über der oberen Liege 6 größer sein soll als der vertikale Abstand zwischen der oberen Liege 6 und der unteren Liege 5. Ansonsten sind alle Bauteile in den Fig. 2 und 3 mit gleichen Bezugszeichen versehen wie in Fig. 1.

Anstelle der im Ausführungsbeispiel nach den Fig. 1 bis 3 gewählten Anordnung der unteren und oberen Liege kann die Erfindung auch in der Weise in die Praxis umgesetzt werden — vgl. Fig. 4 — daß die untere Liege 5a mit ihrem Kopfende an der Seitenkante 4 beginnt und die Diagonalrichtung einnimmt, wie die obere Liege 6 in Fig. 3 und demzufolge die obere Liege 6a dann mit ihrem Kopfende an der Seitenkante 3 beginnt.

Bei dieser Ausführungsform ist eine Zugangsöffnung 17 im Boden 7 der Schlafkabine vorgesehen, die sich über die gesamte von der unteren Liege und den Eckschränken freigelassenen Bodenfläche erstreckt. Wird eine solche Schlafkabine, wie in Fig. 4 gezeigt, auf ein Fahrerhaus mit geringer lichter Höhe aufgesetzt, so ist eine solcherart vergrößerte Durchgangsöffnung im Boden der Schlafkabine dazu geeignet, zumindest auf einer Teilfläche des Fahrerhauses (vorzugsweise der für den Beifahrer zur Verfügung stehenden Teilfläche) die lichte Höhe so zu vergrößern, daß normale Stehhöhe erreicht wird. Dadurch wird z. B. für den Beifahrer die Möglichkeit geschaffen, während der Fahrt aufrecht zu stehen, möglicherweise sogar wenige Schritte zu gehen, ein Vorteil, der bisher nicht erreichbar war.

Schließlich könnte bei einer weiteren Ausführungsform einer erfindungsgemäßen Schlafkabine auch in der Kabinendeckwand sich eine vergrößerte Durchgangsöffnung befinden, die z. B. dann, wenn sich über der Schlafkabine ein Lastkraftwagenfahrerhaus befindet, ebenfalls auf einem Teil der Schlafkabinenfläche volle Stehhöhe ermöglicht.

## Patentansprüche

1. Schlafkabine mit quaderförmigem Innenraum, in dem in verschiedenen Ebenen zwei Liegen (5, 6) angeordnet sind, zur Anbringung am Fahrerhaus eines Lastkraftwagens, dadurch gekennzeichnet, daß die Liegen (5, 6) winkelig zueinander und winkelig zur Fahrzeuglängsrichtung (Längsachse 12) ausgerichtet sind.

2. Schlafkabine nach Anspruch 1, dadurch gekennzeichnet, daß sich jeweils im Bereich einer vertikalen Seitenkante (3, 4) derselben Kabinenseitenwand (1) ein Ende einer Liege befindet und sich die Liege von dort aus diagonal durch den Kabinenraum erstreckt.

3. Schlafkabine nach Anspruch 1 oder 2, dadurch gekennzeichnet, daß die Umfangskontur der Liegen (5, 6) der Kontur des Kabineninnenraums im Bereich der Liegenenden angepaßt ist.

4. Schlafkabine nach Anspruch 1, 2 oder 3, dadurch gekennzeichnet, daß der Diagonalwinkel, den die Liegenlängsachsen mit einer Kabinenseitenwand einschließen, etwa 45° beträgt.

5. Schlafkabine nach einem oder mehreren der Ansprüche 1 bis 4, dadurch gekennzeichnet, daß die von den Liegen (5, 6) freigelassenen, von jeweils zwei Kabinenseitenwänden gebildeten Winkelräume von Eckschränken (9, 10) oder ähnlichen Behältnissen ausgefüllt sind.

6. Schlafkabine nach einem oder mehreren der Ansprüche 1 bis 5, dadurch gekennzeichnet, daß als Zugangsöffnung zur Schlafkabine in der Kabinenboden- oder -deckwand ein Ausschnitt (17) vorgesehen ist.

7. Schlafkabine nach Anspruch 6, dadurch gekennzeichnet, daß der Ausschnitt sich innerhalb der Fläche befindet, die nicht die Projektionsfläche der Liegen (5, 6) auf die Boden- bzw. Deckwand ist.

8. Schlafkabine nach Anspruch 6, dadurch gekennzeichnet, daß der Ausschnitt sich etwa über die ganze von der unteren Liege (5a) und den Eckschränken (9, 10) freigelassenen Bodenfläche erstreckt.

9. Schlafkabine nach einem oder mehreren der Ansprüche 1 bis 8, dadurch gekennzeichnet, daß sie, wie an sich bekannt, unter oder auf dem Fahrerhaus angeordnet ist.

## Claims

1. A sleeping cab attachable to the driver's cab of a lorry and having an interior shaped as a rectangular parallelepiped in which two sleeping berths (5, 6) are arranged at different levels, characterised in that the berths (5, 6) are orientated at an angle with respect to one another and at an angle with respect to the longitudinal direction of the vehicle (longitudinal axis 12).

2. A sleeping cab according to claim 1, characterised in that one end of each berth is arranged in the region of a respective vertical lateral edge (3, 4) of the same side wall (1) of the sleeping cab and each berth extends therefrom diagonally through the sleeping cab.

3. A sleeping cab according to claim 1 or 2, characterised in that the circumferential contour of the berths (5, 6) is adapted to the contour of the interior of the sleeping cab in the region of the berth ends.

4. A sleeping cab according to claim 1, 2 or 3, characterised in that the diagonal angle formed by the longitudinal axes of each berth with a respective side wall of the sleeping cab is approximately 45°.

5. A sleeping cab according to one or more of claims 1 to 4, characterised in that the angular spaces which are left free by the berths (5, 6) and which are in each case formed by two side walls of the sleeping cab are filled with corner cupboards (9, 10) or similar containers. .

6. A sleeping cab according to one or more of claims 1 to 5, characterised in that a cutout (17) is provided in the sleeping cab floor or ceiling as an access opening to the sleeping cab. .

7. A sleeping cab according to claim 6, characterised in that the cutout is arranged within the area which is not the area of projection of the berths (5, 6) onto the floor or ceiling.

8. A sleeping cab according to claim 6, characterised in that the cutout extends approximately over the entire floor area which is left free by the lower berth (5a) and the corner cupboards (9, 10). ·

9. A sleeping cab according to one or several of claims 1 to 8, characterised in that it is arranged under or on the driver's cab, as is known per se.

## Revendications

1. Cabine à couchettes avec espace intérieur de forme parallélépipédique, dans lequel deux couchettes (5, 6) sont disposées dans des plans différents, pour le montage sur la cabine de conduite d'un camion, caractérisée en ce que les couchettes (5, 6) sont orientées avec un angle entre elles et avec un angle par rapport à la direction longitudinale du véhicule (axe longitudinal 12).

2. Cabine à couchettes selon revendication 1, caractérisée en ce qu'au voisinage de chaque arête latérale verticale (3, 4) de la même paroi latérale de cabine (1), se trouve respectivement une extrémité d'une couchette et que la couchette s'étend, à partir de là, en diagonale à travers l'espace de la cabine.

3. Cabine à couchettes selon revendication 1 ou 2, caractérisée en ce que le contour périphérique des couchettes (5, 6) est adapté au contour de l'espace intérieur de la cabine au voisinage des extrémités des couchettes.

4. Cabine à couchettes selon revendication 1, 2 ou 3, caractérisée en ce que l'angle en diagonale que forment les axes longitudinaux des couchettes avec une paroi latérale de la cabine, s'élève à environ 45°.

5. Cabine à couchettes selon une ou plusieurs des revendications 1 à 4, caractérisée en ce que les espaces d'angle laissés libres par les couchettes (5, 6) et formés par respectivement deux parois latérales de la cabine sont remplis par des armoires d'angle (9, 10) ou des réceptacles analogues.

6. Cabine à couchettes selon une ou plusieurs des revendications 1 à 5, caractérisée en ce qu'il est prévu en tant qu'ouverture d'accès à la cabine à couchettes, une découpe (17) dans le fond ou le plafond de la cabine.

7. Cabine à couchettes selon revendication 6, caractérisée en ce que la découpe se trouve à l'intérieur de la surface qui n'est pas la surface de projection des couchettes (5, 6) sur le fond ou le plafond.

8. Cabine à couchettes selon revendication 6, caractérisée en ce que la découpe s'étend approximativement sur toute la surface du fond laissée libre par la couchette inférieure (5a) et les armoires d'angle (9, 10).

9. Cabine à couchettes selon une ou plusieurs des revendications 1 à 8, caractérisée en ce qu'elle est disposée, comme connu en soi, au-dessous ou au-dessus de la cabine de conduite.

**Fig.1**

## Fig. 2

## Fig. 3

Fig. 4